# EUROPEAN PATENT APPLICATION

(11) **EP 1 302 838 A1**
(43) Date of publication of application: **16.04.2003**
(21) Application number: 01410127.3
(22) Date of filing: 09.10.2001
(51) Int. Cl.: G06F 1/18, F16M 11/00, A47B 91/00

(54) **Stabilizing system for computer hardware**

(71) Applicant: Hewlett-Packard Company, Palo Alto, CA 94304 (US)
(72) Inventor: Helot, Jacques, 38000 Grenoble (FR); Rahmouni, Gilbert, 38640 Claix (FR)
(74) Representative: Lloyd, Richard Graham (GB)

(57) **Abstract**

The invention relates to a stabilizing system for a computer casing. One embodiment of the system includes a stabilizing means arranged to be pivotally attached to a computer casing wall. The stabilizing means incorporates retractable extension arms which, in a stabilizing position, extend so that the effective footprint of the computer casing is increased and wherein when the retractable extension arms in a storage position, the stabilizing means may be pivoted into a retraction position within the computer casing. The stabilizing means may be in the form of a flat panel attached so that it's freedom of rotation is limited so as to support the computer casing in an elevated position. The retractable extension arms may be spring loaded and include a mechanism for securing them within the stablizing means.

## Description

### Technical Field

The present invention relates to apparatus for mounting and/or stabilizing computers and computer related hardware. More particularly, although not exclusively, this invention relates to devices for mounting and/or stabilizing desktop, portable and small form-factor computers in orientations which ensure that necessary operating functions such as cooling etc are not compromised.

### Background Art

Traditional designs for personal computers have evolved from the 'standard' personal computer, exemplified by the IBM-AT, to small form-factor PCs such as the e-PC manufactured by Hewlett Packard Company. This design development has resulted in many innovative and creative designs solutions reflecting the acceptance of such hardware in the business and home environment. This evolution in design has also been influenced by aesthetic considerations which were previously considered secondary to the basic task of housing the internal computer hardware in a functional casing unit.

Early types of personal computers were generally characterized by a horizontally mounted motherboards resulting in a quite low case profile with a relatively large footprint. This was necessitated by the PC case needing to be sufficiently large to accommodate motherboard, disk drives, power supplies etc. Early expansion board topologies reinforced the popularity of this type of case construction. However such designs consumed a significant amount of desk or floor space and a number of design solutions were proposed to reduce the PC footprint.

Early adaptations of known PC designs aimed at reducing the PC footprint included mounting the PC case on its side. Such solutions often involved simply tilting a standard PC on its edge, or constructing the case and chassis in a vertical orientation. Designs of the latter type are referred to as 'tower' configurations and sometimes involve the redesign of the computers internal hardware topology to accommodate this orientation.

A common problem with such configurations is that upright or slim line computer cases can be unstable and prone to tipping over. This is particularly so when the computer is located on the floor or perhaps where additional hardware components, for example external disk drives etc, are located on top of the computer case.

Early simple solutions included providing a separate resilient plastic 'foot' device in the form of a cradle into which the edge-mounted PC case could be slid. Such designs are not ideal as PC cases come in a variety of dimensions and not all feet can accommodate every model of PC. Other solutions include integrally molding into the base of the tower case, an outwardly oriented flange or rim. Others include incorporating molded or extruded rails mounted along the edge of the computer casing to extend the footprint slightly. Such methods can increase the footprint and improve stability. However, they may not be ideal as they often do not provide sufficient stability and flexibility in terms of operating functions (cooling etc). These modifications can also interfere with aesthetic aspects or the casing as well as hamper the ability to quickly and easily reorient the computer in a horizontal or vertical position.

It is an object of the present invention to provide for a means and device for stabilizing a PC or computer equipment which is aesthetically pleasing, non-intrusive, compact, solid, easy to retract/extend and which allows through-wall cooling through the underside of the vertically mounted computer or hardware component casing.

### Disclosure of the Invention

In a preferred embodiment, the invention provides for a stabilizing system for a computer casing including:
- a stabilizing means adapted to be pivotally attached to a computer casing wall wherein the stabilizing means incorporates retractable extension arms which, in a stabilizing position, extends so that the effective footprint of the computer casing is increased and wherein when the retractable extension arms in a storage position, the stabilizing means may be pivoted into a retraction position within the computer casing.

Preferably, in the stabilized position, the stabilizing means may be pivoted into a position whereby the substantially downward weight of the computer casing prevents the stabilizing means from pivoting back into the retraction position.

Preferably, the stabilizing means pivots in a plane which is substantially perpendicular to a plane defined by the computer casing wall to which it is attached and wherein the retractable extension arms extend in a direction substantially perpendicular to said plane.

The stabilizing means may be in the form of a panel attached to the computer casing at a proximal end by a hinge means and incorporating, at a distal end, said retractable extension arms.

The retractable extension arms are preferably biased into the stabilizing position by means of springs.

The retractable extension arms may be in the form of elongate pins adapted to be biased out of the stabilizing means in the stabilizing position and inserted into the stabilizing means in the retraction position.

In an alternative embodiment, the invention provides for a stabilizing system for a computer casing including:
a removable stabilizing means adapted to be stored in a storage recess in storage position within the computer casing and wherein, in a stabilizing position, to releasably engage with said storage recess when the stabilizing means is oriented in the stabilizing position.

The stabilizing means preferably includes an engagement means adapted to releasably engage with a storage recess when the stabilizing means is oriented in a storage position and when the stabilizing means is in a stabilizing position, to releaseably engage with the storage recess when in the stabilizing position.

The engagement means is preferably in the form of a pair of resilient members joined at proximal ends to the inner part of the stabilizing means and may include detent means at distal ends shaped and oriented to engage with corresponding detent recesses located in the engagement recess when the stabilizing means is in the storage position and in the stabilizing position.

Preferably, to stabilize the computer casing, the stabilizing means may be rotated through substantially 90 degrees between the storage position and the stabilizing position.

The stabilizing means is preferably generally planar with dimensions such that when it is in the stabilizing position, the effective footprint of the computer casing is increased and when it is in the storage position, it can be pushed into the storage recess and retained therein by means of the engagement means which extend at substantially right angles therefrom and engage with corresponding parts of the engagement surface.

The storage recess is preferably shaped so as to receive the stabilizing means therein when in the storage position.

### Brief Description of the Drawings

The present invention will now be described by way of example only and with reference to the drawings in which:
- Figure 1:: illustrates a cut away view through a computer casing with a stabilizing means in a retracted position and with retractable extension arms in the stored position;
- Figure 2:: illustrates a view of the underside of a computer casing with a stabilizing means in a stabilizing position with retractable extension arms in the extended position;
- Figure 3:: illustrates an alternative embodiment of a computer stabilizing system including a releasable stabilizing means in the form of a panel;
- Figure 4:: illustrates an underside of a computer casing incorporating the stabilizing means in a stabilizing position; and
- Figure 5:: illustrates a view of a releasable stabilizing means in the form of a panel.

### Best Mode for Carrying Out the Invention

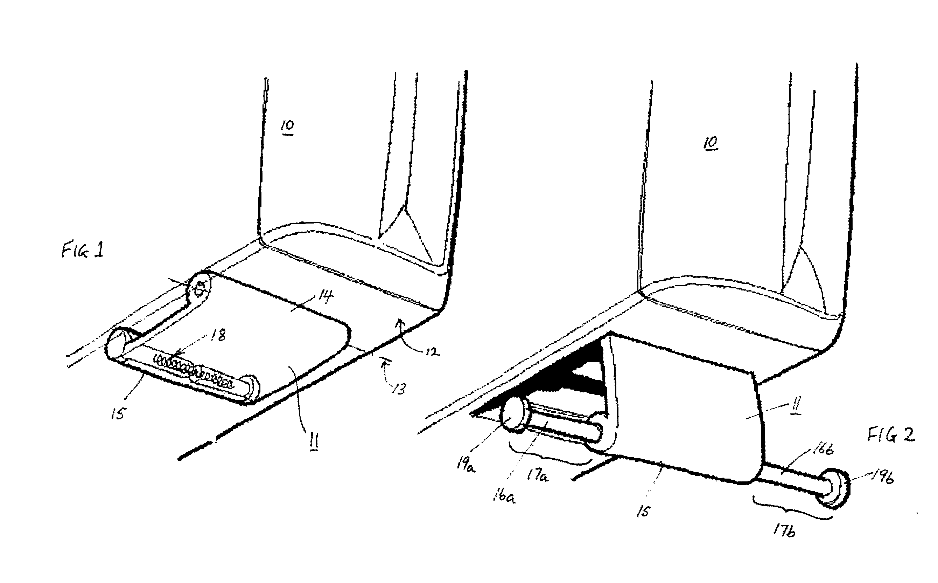

Figures 1 and 2 illustrate a first embodiment of a stabilizing system for a computer casing 10. Figure 1 shows a stabilizing means 11 in a storage position retracted within the computer casing. The stabilizing means 11 is adapted to be pivotally attached to a computer-casing wall 12 by means of a hinge mechanism. The axis of rotation is indicated by the numeral 13 in figure 1. In a preferred embodiment, the stabilizing means 11 incorporates retractable extension arms 16a and 16b, more clearly seen in figure 2, which, in a stabilizing position, extends as shown in figure 2. In this configuration, the 'effective footprint' of the computer casing is increased depending on the length of the arms 16a,b.

The effective footprint of the computer casing can be defined as the effective "area" which is encompassed by the base of the computer where that area contributes to the stability of the computer. In the simplest case where no stabilizing system is employed, the effective footprint is the area of the base of the computer casing, or side wall as the case may be, which rests on the support surface. In the prior art cases discussed in the preamble to this specification, the effective area can be increased by, for example, the planar rotation of a support foot so that it extends outwardly from either side of the casing. This extension is referred to as extending the effective footprint in a direction substantially perpendicular to the front-back axis of the computer casing.

Figure 1 illustrates the stabilizing system in a storage position. In this configuration, the retractable extension arms 17a and 17b are pushed into apertures in the distal end 15 of the stabilizing means 11 and the stabilizing means 11 is pivoted around a hinge axis 13 into the casing 10. The stabilizing means 11 may be retained within the casing by means of a releasable catch or similar (not shown). Similarly, the retractable extension arms themselves may be retained within the apertures in the distal end of the stabilizing means 11 by way of a securing mechanism. This may correspond to a resilient catch molded into the arm storage apertures which engage with the ends of the arms 19. Preferably, the relative geometry of the stabilizing means 11 and casing 10 is such that the stabilizing means 10 is flush with the outer surface 12 of the casing 10 when it is in the storage position shown in figure 1.

To stabilize the computer casing 10, the stabilizing means 11 is pivoted into a stabilizing position with respect to the computer casing. In this orientation, the stabilizing means 11 is positioned so that the generally vertically directed weight of the computer casing prevents the stabilizing means 11 from pivoting back into the retraction position shown in figure 1. This may be effected by adapting the hinge or pivot mechanism located at the proximal end 14 of the stabilizing means 11 to limit the degree of movement of the stabilizing means 11 with respect to the casing outer wall. Suitable methods such as hinge limiting mechanisms are known in the molding and construction arts and will not be discussed in detail.

According to the preferred embodiment illustrated, the stabilizing means 11 pivots in a plane which is substantially perpendicular to a plane defined by the computer casing wall 12 to which it is attached. The retractable extension arms 17a,b extend in a direction substantially perpendicular to this plane. This orientation for the retractable extension arms is considered to be preferred as it provides the largest effective footprint for a given retractable extension arms length, and thus enhances the stability of the computer casing when the arms are in the stabilizing position. Other relative orientations may be feasible within the scope of the invention.

In the preferred embodiment illustrated, the stabilizing means is in the form of a panel which is attached to the computer casing at a proximal end 14 by a hinge means and incorporating, at a distal end 15, the retractable extension arms 17a,b.

In the embodiment shown, the retractable extension arms are 17a,b are biased into the stabilizing (extended) position by means of springs 18. According to this construction, as soon as the stabilizing means 11 is pulled out of its storage recess, it pivots around the hinge, or proximal, end 14 and once the distal, or outer, end 15 is free from the storage recess, the retractable extension arms 17a,b pop out of the stabilizing means into the extended stabilizing position.

In the embodiment shown, the retractable extension arms are in the form of elongate pins 16a,b having feet 19a,b. The presence of the feet 19a,b allows the diameter of the retractable extension arms to match the lower surface of the distal end 15 of the stabilizing means 11 which rests on the support surface. This aids the sideways stability of the computer. Other designs are possible within the scope of the invention, such as incorporating rubber feet etc. The ends of the arms may also incorporate features which engage with the inner wall of the storage recess so that the stabilizing means is securely fastened in place for shipping. Similarly, the shape of the stabilizing means 11 may itself be different. For example, rather than being in the form of a panel, the shape may be generally Y or T-shaped with the retractable extension arms located at ends of the arms of the Y or T with the hinge being formed in the bottom of the base. Also, depending on the desired elevation of the computer casing, the distance between the distal and proximal ends of the stabilizing means 11 may be increased or decreased.

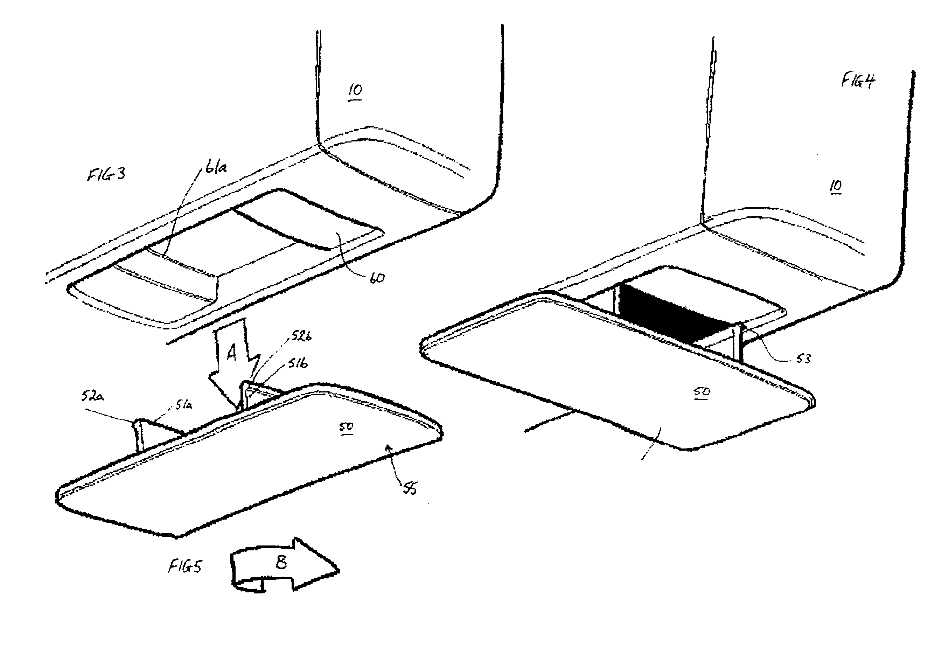

A second embodiment of a stabilizing system for a computer casing is shown in figures 3 to 5. This embodiment includes a releasable and removable stabilizing means 50 which is constructed to be contained in a storage recess 60 in a retracted position within the computer casing 10. In the preferred configuration shown, the stabilizing means includes a panel member 55 which forms part of the outer casing wall when the stabilizing means is retracted. In the stabilizing position (shown in figure 4), the stabilizing means 50 releasably engages with the inside of the storage recess 60. In the embodiment described, this corresponds to a relative orientation of 90 degrees between the stabilizing means storage position and stabilizing orientation.

The stabilizing means 50 includes an engagement means adapted to releasably engage with the storage recess 60 both when the stabilizing means 50 is oriented in the storage position and when the stabilizing means is in the stabilizing position.

In the embodiment shown, the engagement means is in the form of a pair of resilient panel members 52a and 52b joined at proximal edges (not visible in the figures) to the inner face of the stabilizing means foot 51. These members include detents 52a and 52b located at or along distal edges 51a,b which are shaped and oriented to engage with corresponding detent recesses or slots 53 (see figure 4) located in the engagement recess 60. In the present example, the engagement means are shown in the form of two opposing flat panels joined at their edges to the inside surface of the stabilizing means. Alternative embodiments are possible and could include two or more thinner flat members replacing a single panel member shown in the figure. The viability of this construction would depend on the required strength of the components of the engagement means, their resilience and the anticipated weight that they would need to support.

To position and secure the stabilizing means 50 in the support position, it is pulled out of the storage recess 60 in the direction shown by the letter A. It is then rotated through 90 degrees as shown by the letter B and re-inserted into the storage recess 60. The detents 52a,b then engage with detent recesses located inside or adjacent the inner lip of the storage recess 60 as shown in figure 4.

In the embodiment illustrated, the resilient members forming the engagement means are molded from plastic. Thus, the members will "spring" into engagement when the stabilizing means 50 is pushed into the storage recess 60 in the orientation shown in figure 4 and the detents 52a,b are in registration with the detent recesses 53.

As shown in the figures, the preferred construction includes a stabilizing means 50 which is generally planar and with dimensions such that when it is in the stabilizing position, the effective footprint of the computer casing is increased. When it is stored, it is pushed into the storage recess 60 and retained therein by means of the engagement means which engage with similar suitably located detent recesses in the inside of the recess 60.

The storage recess 60 is shaped so as to receive the stabilizing means in both the storage and stabilizing position. As noted above, it may include a further pair of detent recesses 61a,b which are located deeper in the storage recess 60. These are oriented and arranged to capture the detents 51a,b when the stabilizing means is pushed fully into the storage recess 60. This engagement action retains the stabilizing means in the recess 60 for transport, shipping or when the computer casing is stored in an orientation where stabilizing is not necessary.

Variants include providing finger slots or cuts (not shown) in the recess 60. These modifications assist the user in extracting the stabilizing means from the casing. To this end, it is envisaged that the construction of the stabilizing means 50 will be such that the detents and recess are relatively easily engaged and disengaged by simply pulling or pushing the stabilizing means into or out of the storage recess.

To increase the supporting strength of the stabilizing system, the interior of the storage recess may include a lip or step adjacent the detent recesses 53 so that the weight of the computer is not supported entirely by the engagement of the detents 52a,b and recesses 53a,b. It may be preferred that the distal ends ofthe engagement members bear against a solid piece of molding or part of the casing wall when the stabilizing means is oriented at 90 degrees to the front-back axis of the casing. Other modifications to effect this variation are possible and are considered to be within the scope of the invention. Other possible modifications include the stabilizing means being constructed with a different shape, perhaps with tapering distal ends or other shape as specified in a design brief. Similarly, the engagement panels might be angled to the base of the stabilizing means instead of being at right-angles. Again this may be a matter of design selection or prove to be more solid and stable.

Thus it can be seen that the present invention provides for aesthetically appealing and compact designs for a stabilizing system for a computer. The invention is readily adaptable to modification to satisfy different designs and appearances. Multiple stabilizing mounts may be used in a single casing and the invention can also be applied to differently shaped and oriented computer hardware. The invention further prevents accidental loss of the stabilizing means, for example in transit or shipping and it is considered that the construction is particularly simple and effective to implement.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A stabilizing system for a computer casing including:
- a stabilizing means adapted to be pivotally attached to a computer casing wherein the stabilizing means incorporates retractable extension arms which, in a stabilizing position, may be extended so that the effective footprint of the computer casing is increased and wherein when the retractable extension arms are retracted in a storage position, the stabilizing means may be pivoted into a retraction position within the computer casing.

2. A stabilizing system for a computer casing as claimed in claim 1 wherein in the stabilized position, the stabilizing means is pivoted into a position whereby the substantially downward weight of the computer casing prevents the stabilizing means from pivoting back into the retraction position.

3. A stabilizing system for a computer casing as claimed in any preceding claim wherein the stabilizing means pivots in a plane which is substantially perpendicular to a plane defined by the computer casing wall to which it is attached and wherein the retractable extension arms extend in a direction substantially perpendicular to said pivot plane.

4. A stabilizing system for a computer casing as claimed in any preceding claim wherein the stabilizing means is in the form of a panel attached to the computer casing at a proximal end by a hinge means and incorporating, at a distal end, said retractable extension arms.

5. A stabilizing system for a computer casing as claimed in any preceding claim where the retractable extension arms are biased into the stabilizing position by means of springs.

6. A stabilizing system for a computer casing as claimed in claim 5 wherein the retractable extension arms are in the form of elongate pins adapted to be biased out of apertures in the stabilizing means in the stabilizing position, and inserted into apertures in the stabilizing means so that the stabilizing means can be moved into the retraction position.

7. A stabilizing system for a computer casing including:
a removable stabilizing means adapted to be stored in a storage recess in storage position within the computer casing and wherein, in a stabilizing position, to releasably engage with said storage recess when the stabilizing means is oriented in the stabilizing position.

8. A stabilizing system as claimed in claim 7 wherein the stabilizing means includes an engagement means adapted to releasably engage with a storage recess when the stabilizing means is oriented in a storage position and to releaseably engage with the storage recess when in the stabilizing position.

9. A stabilizing system as claimed in claim 8 wherein the engagement means is in the form of a pair of resilient members joined at proximal ends to an inside face of the stabilizing means and includes detent means at distal ends shaped and oriented to engage with corresponding detent recesses located in the engagement recess when the stabilizing means is in the storage position and in the stabilizing position.

10. A stabilizing system as claimed in either one of claims 7 or 8 wherein the stabilizing means is rotated through substantially 90 degrees between the storage position and the stabilizing position.

11. A stabilizing system as claimed in any one of claims 7 to 9 wherein the stabilizing means is generally planar with dimensions such that when it is in the stabilizing position, the effective footprint of the computer casing is increased and when it is in the storage position, it can be pushed into the storage recess and retained therein by means of the engagement means which extending at substantially right angles therefrom and engage with corresponding parts of the engagement surface.

12. A stabilizing system as claimed in any one of claims 7 to 10 wherein the storage recess is shaped so as to receive the stabilizing means therein when in the storage position.

13. A stabilizing means adapted for use with the stabilizing system claimed in any one of claims 1 to 12.

14. A computer casing incorporating the stabilizing system claimed in any one of claims 1 to 12.
